# EUROPÄISCHE PATENTSCHRIFT

(11) **EP 2 796 273 B1**
(45) Veröffentlichungstag und Bekanntmachung des Hinweises auf die Patenterteilung: **04.04.2018**
(21) Anmeldenummer: 14001415.0
(22) Anmeldetag: 17.04.2014
(51) Int. Cl.: B29C 64/20, B33Y 30/00

(54) **Schutzvorrichtung für generative Fertigungsverfahren, damit versehene Fertigungsvorrichtung sowie damit durchführbares generatives Fertigungsverfahren**
Protection device for generative production methods, production device provided with same and generative production method that can be carried out with same
Dispositif de protection pour procédés de fabrication génératifs, dispositif de fabrication doté de celui-ci et procédé de fabrication génératif pouvant être exécuté à l'aide de celui-ci

(30) Priorität: 22.04.2013 DE 102013006834; 28.06.2013 DE 102013010771
(43) Veröffentlichungstag der Anmeldung: 29.10.2014
(73) Patentinhaber: Airbus Defence and Space GmbH, 85521 Ottobrunn (DE)
(72) Erfinder: Palm, Frank, 82008 Unterhaching (DE)
(74) Vertreter: Kastel, Stefan

(56) Entgegenhaltungen:
- DE-A1- 19 952 998

## Beschreibung

Die Erfindung betrifft eine Schutzvorrichtung für ein generatives Fertigungsverfahren. Weiter betrifft die Erfindung eine Fertigungsvorrichtung zum Durchführen eines generativen Fertigungsverfahrens mit einer solchen Schutzvorrichtung. Schließlich betrifft die Erfindung ein mit der Schutzvorrichtung sowie der Fertigungsvorrichtung durchführbares generatives Fertigungsverfahren.

Der Begriff "generatives Fertigungsverfahren" ist eine umfassende Bezeichnung für die auch häufig als "Rapid Prototyping" bezeichneten Verfahren zur schnellen und kostengünstigen Fertigung von Modellen, Mustern, Prototypen, Werkzeugen, Vorprodukten, Zwischenprodukten und Endprodukten. Diese Fertigung erfolgt direkt auf der Basis der rechnerinternen Datenmodelle aus formlosen oder formneutralen Materialien mittels chemischer und/oder physikalischer Prozesse. Beispiele für formlose Materialien sind Flüssigkeiten, Pulver oder Ähnliches. Beispiele für formneutrale Materialien sind z.B. bandförmige oder drahtförmige Materialien. Obwohl es sich um urformende Verfahren handelt, sind für konkrete Erzeugnisse keine speziellen Werkzeuge wie z.B. Gussformen oder Ähnliches erforderlich, die die jeweilige Geometrie des Werkzeuges gespeichert haben.

Zu diesen Verfahren zählt man unter anderem Stereolithographie, selektives Laserschmelzen, selektives Lasersintern, Fused Deposition Modelling, Laminated Object Modelling und 3-D-Printing sowie Kaltgasspritzen.

Meist werden bei den generativen Fertigungsverfahren die Modelle, Muster, Prototypen, Werkzeuge oder Produkte in Schichten nach und nach aufgebaut, wobei für den Bearbeitungsprozess Strahlung wie z.B. Laserstrahlung oder Elektronenstrahlen verwendet werden.

Konkrete Beispiele für generative Fertigungsverfahren sind in der WO 2008/125497 A1, der WO 2012/083922 A1 oder der DE 43 00 478 C1 beschrieben.

Eine Übersicht über schnelle Fertigungsverfahren von Metallkomponenten durch Laserumformen findet sich in dem Artikel: Santos et al: Rapid manufacturing of metal components by laser forming, International Journal of Machine Tools & Manufacture 46 (2006), 1459-1468. Darin wird unter anderem als Beispiel ein Laser-Pulverbett-Verfahren beschrieben, bei dem Materialpulver in einer abgedichteten Prozesskammer mit einer Laserstrahlung beaufschlagt wird. Die Laserstrahlung wird mittels eines Scanner-Systems über das Pulverbett verfahren, um so schichtweise diejenigen Bereiche zu verfestigen, die innerhalb der jeweiligen Schicht das herzustellende Produkt bilden sollen. Hierzu dient als Schutzeinrichtung zum Trennen der Prozesskammer von einer Strahlerzeugungseinrichtung und/oder einer Strahlungsbeeinflussungseinrichtung - wie z.B. einem Lenkungs- oder Scan-System zum Lenken der Materialbearbeitungsstrahlung über das Pulverbett - eine Glasscheibe, die ein Fenster der Prozesskammer, durch welche die Materialbearbeitungsstrahlung hindurchgeleitet wird, abdichtet.

Durch eine solche Schutzeinrichtung werden empfindliche Strahlerzeugungs- und Strahlbeeinflussungseinrichtungen zwar wirksam vor Beeinträchtigungen aufgrund des Umformprozesses geschützt; allerdings ergeben sich in einem Dauerbetrieb Probleme, insbesondere hinsichtlich einer zunehmend abnehmenden Transparenz (zunehmender Beaufschlagung der Scheibe durch kondensierende Prozessdämpfe) der Schutzeinrichtung für die Materialbearbeitungsstrahlung. Dadurch werden die Prozess-Wirkungsparameter der verwendeten Strahlquelle in der Prozesskammer negativ verändert, was zu schlechteren, nicht konstanten Prozessergebnissen führt. In Folge dessen muss dann der Laser gestützte Aufbauprozess unterbrochen und die eingetrübte Schutzscheibe ausgetauscht werden.

Gemäss dem Oberbegriff des Anspruchs 1 ist aus der DE 199 52 998 A1 eine Fertigungsvorrichtung zum Durchführen eines generativen Fertigungsverfahrens gemäss dem Oberbegriff des Anspruchs 11 derart bekannt, dass Körper im Schichtaufbau auf pulverförmigen Stoffen im Vakuum mittels eines Laser-Pulverbett-Verfahrens aufgebaut werden. Eine Prozesskammer ist dabei mit einer Abdeckplatte als Schutzvorrichtung vorgesehen. Die Abdeckplatte kann schlitzförmige Fenster zum Durchlassen der Materialbearbeitungsstrahlung aufweisen und ist drehbar und somit bewegbar ausgeführt, um trotz der schlitzförmigen Ausbildung der Fenster einen größeren Bereich des Pulverbettes mit der Materialbearbeitungsbestrahlung abtasten zu können. Um eine Anhaftung von Pulver vermeiden zu können, wird dabei vorgeschlagen, die bewegbare Abdeckplatte oder Deckplatte pulverabweisend zu beschichten.

Aufgabe der Erfindung ist es, eine Schutzvorrichtung für ein generatives Fertigungsverfahren, eine Fertigungsvorrichtung zum Durchführen eines generativen Fertigungsverfahrens und/oder ein generatives Fertigungsverfahren derart zu verbessern, dass ein Dauerbetrieb mit konstanten Prozessergebnissen besser möglich ist.

Zum Lösen dieser Aufgabe werden eine Schutzvorrichtung, eine Fertigungsvorrichtung sowie ein Fertigungsverfahren gemäß den unabhängigen Ansprüchen vorgeschlagen.

Vorteilhafte Ausgestaltungen der Erfindung sind Gegenstand der Unteransprüche. Gemäß einem ersten Aspekt schafft die Erfindung eine Schutzvorrichtung für ein generatives Fertigungsverfahren, in welchem zu bearbeitendes Material durch eine Materialbearbeitungsstrahlung selektiv umgeformt wird, umfassend eine für die Materialbearbeitungsstrahlung transparente Schutzeinrichtung zum Trennen einer Strahlerzeugungseinrichtung und/oder einer zum Lenken, Fokussieren oder sonstigen Beeinflussung der Materialbearbeitungsstrahlung vorgesehenen Strahlungsbeeinflussungseinrichtung von dem zu bearbeitenden Material und/oder von dem Materialbearbeitungsprozess und eine Schutzeinrichtungsbewegungseinrichtung zum Bewegen der Schutzeinrichtung relativ zu der an die Schutzeinrichtung angrenzenden Atmosphere, wobei die Schutzeinrichtungsbewegungseinrichtung dazu ausgebildet ist, die Schutzeinrichtung derart zu bewegen, dass Atmosphärengrenzschichten nahe einer Oberfläche - insbesondere einer dem zu bearbeitenden Material oder dem Bearbeitungsprozess zugewandten Oberfläche - turbulent beaufschlagt sind.

Es ist bevorzugt, dass die Schutzeinrichtungsbewegungseinrichtung zum Schwingen, Vibrieren und/oder Drehen der Schutzeinrichtung ausgebildet ist.

Es ist bevorzugt, dass die Schutzeinrichtung einen scheibenförmigen Körper aus einem für die Materialbearbeitungsstrahlung transparenten Material umfasst, wobei die Schutzeinrichtungsbewegungseinrichtung zum Bewegen des Körpers relativ zu dem zu bearbeitenden Material und/oder relativ zu der Materialbearbeitungsstrahlung ausgebildet ist.

Es ist bevorzugt, dass die Schutzeinrichtung eine für eine als Materialbearbeitungsstrahlung verwendete Laserstrahlung transparente Glasscheibe umfasst, wobei die Schutzeinrichtungsbewegungseinrichtung zum Bewegen der Glasscheibe relativ zu dem zu bearbeitenden Material und/oder relativ zu der Materialbearbeitungsstrahlung ausgebildet ist.

Es ist bevorzugt, dass die Schutzeinrichtungsbewegungseinrichtung einen Motor zum Bewegen der Schutzeinrichtung und/oder einen Schwingungserzeuger zum Vibrieren oder Schwingen der Schutzeinrichtung umfasst.

Es ist bevorzugt, dass die Schutzeinrichtungsbewegungseinrichtung zum permanenten Bewegen der Schutzeinrichtung mit einer derartigen Geschwindigkeit und/oder einer derartigen Dreh- oder Schwingungsfrequenz ausgebildet ist, dass eine Kondensation von Materialdampf auf der Schutzeinrichtung verringert oder verhindert wird.

Gemäß einem weiteren Aspekt schafft die Erfindung eine Fertigungsvorrichtung zum Durchführen eines generativen Fertigungsverfahrens mit einer Bestrahlungsvorrichtung und einer Schutzvorrichtung der zuvor genannten Art oder ihrer vorteilhaften Ausgestaltungen. Die Bestrahlungsvorrichtung umfasst bevorzugt eine Strahlerzeugungseinrichtung zur Erzeugung der Materialbearbeitungsstrahlung und/oder eine Strahlungsbeeinflussungseinrichtung zum Lenken, Fokussieren und/oder sonstige Beeinflussungen der Materialbearbeitungsstrahlung.

Es ist bevorzugt, dass die Strahlerzeugungseinrichtung einen Laser zum Erzeugen einer Laserstrahlung als Materialbearbeitungsstrahlung umfasst.

Es ist bevorzugt, dass die Strahlungsbeeinflussungseinrichtung eine Linse zum Fokussieren der Materialbearbeitungsstrahlung umfasst.

Bei einer bevorzugten Ausgestaltung der Fertigungsvorrichtung ist vorgesehen, dass eine Prozesskammer zum Durchführen der Materialbearbeitung vorgesehen ist und dass die Schutzeinrichtung die Prozesskammer von der Strahlerzeugungseinrichtung und der Strahlungsbeeinflussungseinrichtung abtrennt.

Es ist bevorzugt, dass die Schutzeinrichtung eine Scheibe aus für die Materialbearbeitungsstrahlung transparentem Material umfasst, die in eine Öffnung der Prozesskammer eingesetzt ist und relativ zu einer die Öffnung berandenden Öffnungsberandung der Prozesskammer beweglich gelagert ist, wobei die Schutzeinrichtungsbewegungseinrichtung zur Bewegung der Scheibe relativ zu der Öffnungsberandung ausgebildet ist.

Es ist bevorzugt, dass die Fertigungsvorrichtung als Laser-Pulverbett-Anlage zum schichtweisen Generieren und/oder Umschmelzen von Pulvermaterial, Metallpulver und/oder Kunststoffpulver ausgebildet ist.

Gemäß einem weiteren Aspekt schafft die Erfindung ein generatives Fertigungsverfahren zum schichtweisen Generieren eines Werkstücks durch selektives Bestrahlen eines zu bearbeitenden Materials mit einer Materialbearbeitungsstrahlung, umfassend:
a) Leiten der Materialbearbeitungsstrahlung durch eine Schutzeinrichtung, um eine Strahlerzeugungseinrichtung und/oder eine Strahlungsbeeinflussungseinrichtung von dem Materialbearbeitungsprozess zu trennen, und
b) Bewegen der Schutzeinrichtung, um eine Verschmutzung und/oder eine Kondensation von zu bearbeitendem Material auf der Schutzeinrichtung zu verringern oder zu verhindern.

Erfindungsgemäß umfasst Schritt b): Erzeugen einer turbulenten Grenzschicht nahe der Oberfläche der Schutzeinrichtung.
Es ist bevorzugt, dass Schritt a) umfasst: Leiten einer Laserstrahlung durch ein als Schutzeinrichtung verwendetes Schutzglas.
Es ist bevorzugt, dass Schritt b) umfasst: Schwingen und/oder Drehen der an einer Öffnung einer Prozesskammer angeordneten Schutzeinrichtung relativ zu der Öffnung.

In einem konkreten Beispiel wird eine Schutzvorrichtung und/oder eine Bestrahlungsvorrichtung zur Verwendung in einem Laser-Pulverbett-Verfahren vorgeschlagen. Die Fertigungsvorrichtung ist beispielsweise als Laser-Pulverbett-Anlage ausgebildet. Laser-Pulverbett-Anlagen werden zum schichtweisen Generieren (Umschmelzen) von Metallpulvern und/oder Kunststoffpulvern oder sonstigen Pulvermaterialien eingesetzt. Die Strahlung, wie z.B. Laserlicht, wird hierzu über eine Linse oder dergleichen fokussiert in eine Prozesskammer geführt. Zum Schutz solcher in der Regel sehr teuren Linsen oder sonstigen ebenfalls aufwändigen Strahlungsbeeinflussungseinrichtungen ist in oder an der Kammer eine Schutzeinrichtung, beispielsweise mit einem Schutzglas, vor der Strahlungsbeeinflussungseinrichtung, wie z.B. der Linse, montiert. Bei bisherigen Anlagen, bei denen ein solches Schutzglas zum Absiegeln der Prozesskammer vorhanden war, bestand jedoch das Problem, dass während des Betriebes dieses Schutzglas durch Schmelzspritzer und/oder der kondensierenden Schmelzrauch verschmutzt wird, so dass die Transmission des Laserlichts stetig abnimmt. Dadurch wird der Dauerbetrieb der Anlage empfindlich gestört bzw. unmöglich.

Durch vorteilhafte Ausgestaltungen der Erfindung soll ein generatives Fertigungsverfahren im ungestörten Dauerbetrieb ermöglicht werden.

Bei einer besonders bevorzugten Ausgestaltung wird das Problem einer Verschmutzung einer Schutzeinrichtung, wie z.B. eines Schutzglases oder dergleichen, dadurch gelöst, dass das Schutzglas oder die sonstige Schutzeinrichtung nicht statisch eingebaut wird, sondern sich permanent - insbesondere sehr schnell - bewegt. Zum Beispiel ist die Schutzeinrichtung schwingend oder drehend bewegbar. Eine derartige Bewegung verhindert sehr effizient die Kondensation von Metall- oder Kunststoffdampf. Insbesondere gelingt dies, wenn die zur Kondensation notwendigen, sehr ruhigen grenzflächennahen Strömungsbedingungen nicht vorliegen.

Vorteile von bevorzugten Ausgestaltungen der Erfindung sind ein sicherer und dauerhafter Betrieb einer Laser-Pulverbett-Schmelzanlage oder einer sonstigen Anlage für generative Fertigungsverfahren, verbesserte Resultate hinsichtlich Werkstoffqualität und Bauteilqualität sowie ein längerer Einsatz von Schutzeinrichtungen, wie z.B. von recht teuren Laserschutzgläsern.

Ausführungsbeispiele der Erfindung werden nachfolgend anhand der beigefügten Zeichnungen näher erläutert. Darin zeigt:
- Fig. 1: eine schematische Prinzipdarstellung einer Fertigungsvorrichtung zum Durchführen eines generativen Fertigungsverfahrens gemäß einem ersten Ausführungsbeispiel;
- Fig. 2: eine schematische Prinzipdarstellung einer Fertigungsvorrichtung zum Durchführen eines generativen Fertigungsverfahrens gemäß einem zweiten Ausführungsbeispiel; und
- Fig. 3: eine schematische Prinzipdarstellung einer Fertigungsvorrichtung zum Durchführen eines generativen Fertigungsverfahrens gemäß einem dritten Ausführungsbeispiel.

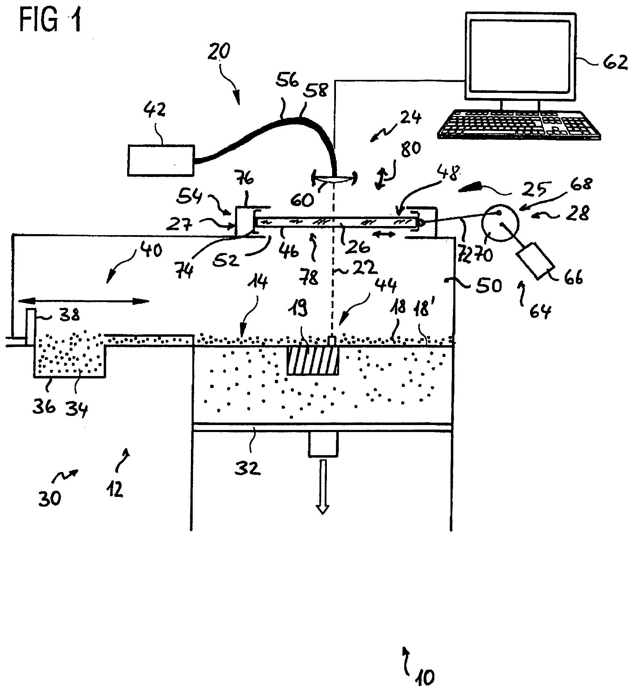

In den Fig. 1 bis 3 sind unterschiedliche Ausführungsbeispiele einer Fertigungsvorrichtung 10 zum Durchführen von generativen Fertigungsverfahren gezeigt.

Die Fertigungsvorrichtung 10 weist eine Materialbereitstellungseinrichtung 12 zum schichtweisen Bereitstellen von zu bearbeitendem Material 14 sowie eine Bestrahlungsvorrichtung zum selektiven Bestrahlen der durch die Materialbereitstellungseinrichtung 12 bereitgestellten Materialschicht 18 auf.

Die Bestrahlungsvorrichtung weist eine Strahlerzeugungseinrichtung 20 zum Erzeugen einer Materialbearbeitungsstrahlung 22 und wenigstens eine Strahlungsbeeinflussungseinrichtung 24 auf. Die Strahlungsbeeinflussungseinrichtung 24 ist insbesondere zum Lenken, Fokussieren oder sonstigen Beeinflussung der Materialbearbeitungsstrahlung 22 ausgebildet.

Weiter weist die Bestrahlungsvorrichtung eine Schutzvorrichtung 25 zum Trennen der Strahlerzeugungseinrichtung 20 und/oder der Strahlungsbeeinflussungseinrichtung 24 von dem zu bearbeitenden Material 14 und/oder von dem Materialbearbeitungsprozess auf. Die Schutzvorrichtung 25 weist eine für die Materialbearbeitungsstrahlung 22 transparente Schutzeinrichtung 26, eine Lagerung 27 zum beweglichen Halten der Schutzeinrichtung 26 und eine Schutzeinrichtungsbewegungseinrichtung 28 auf.

Die Schutzeinrichtung 26 ist somit beweglich ausgebildet. Insbesondere ist die Schutzeinrichtungsbewegungseinrichtung 28 vorgesehen, mittels der die Schutzeinrichtung 26 bewegt werden kann.

Die Schutzeinrichtungsbewegungseinrichtung 28 ist insbesondere derart ausgebildet, dass die Schutzeinrichtung 26 schwingend, vibrierend und/oder drehend relativ zu dem zu bearbeitenden Material 14 bzw. relativ zu der Materialbereitstellungseinrichtung 12 bewegbar ist. Insbesondere erfolgt die Bewegung der Schutzeinrichtung 26 unabhängig von einer Bewegung der Materialbearbeitungsstrahlung 22, die zum selektiven Bearbeiten der Materialschichten 18 durchgeführt wird.

Die Schutzvorrichtung 25 ist insbesondere derart ausgebildet, dass im Betrieb der Fertigungsvorrichtung 10 eine permanente Bewegung der Schutzeinrichtung derart erfolgen kann, dass wenigstens eine Grenzschicht einer Atmosphäre an einer dem Materialbearbeitungsprozess zugewandten Oberfläche der Schutzeinrichtung gestört wird, insbesondere turbulent beaufschlagt wird.

In den konkreten Beispielen der Fig. 1 bis 3 ist die Fertigungsvorrichtung 10 vorzugsweise als Laser-Pulverbett-Anlage 30 ausgebildet. Die Materialbereitstellungseinrichtung 12 weist insbesondere ein Pulverbett 32 auf, an dem durch eine Pulverauftragseinrichtung 40 Materialpulver 34 als zu bearbeitendes Material 14 als Materialschicht 18 zur Verfügung gestellt wird. Hierzu gibt es z.B. ein Pulverreservoir 36, aus dem das Materialpulver 34 beispielsweise durch einen Schieber 38 auf die zuletzt bearbeitete Materialschicht 18' aufgetragen wird. Der Schieber 38 ist lediglich ein Beispiel für die Pulverauftragseinrichtung 40, hier können viele andere mögliche Pulverauftragseinrichtungen 40 eingesetzt werden, wie z.B. Pulverdüsen zum selektiven Pulverauftrag usw.

Gesteuert durch eine Datenverarbeitungsanlage werden bestimmte Bereiche der Materialschicht 18 bestrahlt, um so das Material 14 urzuformen (z.B. aufzuschmelzen) und ein Werkstück 19 auszubilden. Anschließend wird das Pulverbett 32 nach unten verfahren und die Pulverauftragseinrichtung 40 bringt über die zuvor bearbeitete Materialschicht 18' eine neue Materialschicht 18 zur erneuten selektiven Bestrahlung auf.

In den in den Fig. 1 bis 3 dargestellten Ausführungsbeispielen der Fertigungsvorrichtung 10, wo diese als Laser-Pulverbett-Anlage 30 ausgebildet ist, ist weiter als Beispiel für eine Strahlerzeugungseinrichtung 20 ein Laser 42 vorgesehen, um Laserstrahlung 44 als Materialbearbeitungsstrahlung 22 zu erzeugen. Die Schutzeinrichtung 26 weist insbesondere einen scheibenförmigen Körper 46 aus für die Laserstrahlung 44 transparentem Material, wie insbesondere aus einem Laserschutzglas, auf. Insbesondere ist demnach die Schutzeinrichtung 26 als Glasscheibe 48 ausgebildet.

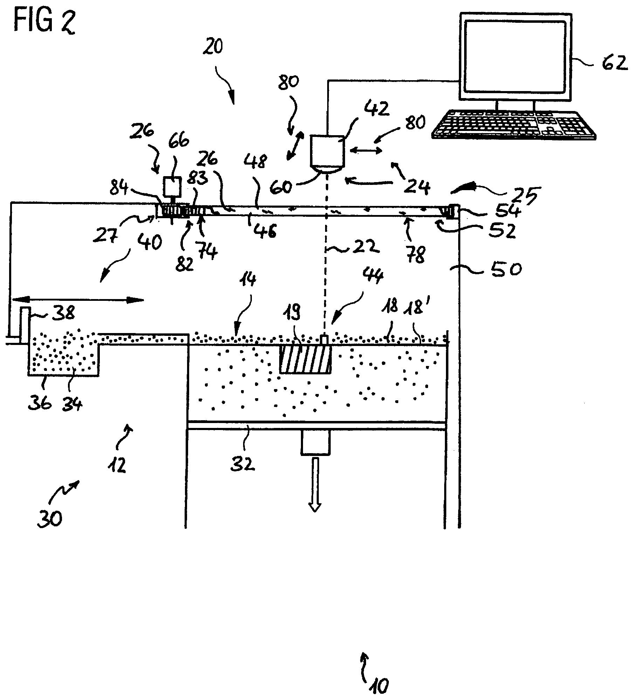

Bei den in den Fig. 1 und 2 dargestellten Ausführungsformen ist die Materialbereitstellungseinrichtung 12 in einer Prozesskammer 50 untergebracht, wobei die Materialbearbeitungsstrahlung 22 durch eine Öffnung 52 in die Prozesskammer 50 eingeleitet wird, an der die Schutzeinrichtung 26 zum Trennen der Prozesskammer 50 von der Strahlerzeugungseinrichtung 22 bzw. der Strahlungsbeeinflussungseinrichtung 24 vorgesehen ist.

Die Öffnung 52 weist eine Öffnungsberandung 54 auf. Die insbesondere als Glasscheibe 48 ausgebildete Schutzeinrichtung 26 ist durch die Lagerung 27 an der Öffnungsberandung 54 beweglich gehalten und mittels der Schutzeinrichtungsbewegungseinrichtung 28 relativ zu dieser Öffnungsberandung 54 bewegbar.

Bei allen drei dargestellten Ausführungsformen ist die Schutzeinrichtungsbewegungseinrichtung 28 derart ausgebildet, dass die Schutzeinrichtung 26 derart schwingend, vibrierend und/oder drehend mit einer derartigen Geschwindigkeit bewegt wird, dass eine Kondensation von zu bearbeitendem Material 14 auf der Schutzeinrichtung 26 gegenüber konventionellen feststehenden Schutzeinrichtungen zumindest verringert wird oder ganz vermieden wird.

Im Folgenden werden die Unterschiede der einzelnen Ausführungsformen näher erläutert.

Bei der in Fig. 1 dargestellten beispielhaften Ausführungsform der Fertigungsvorrichtung 10 wird die Laserstrahlung 44 des Lasers 42 durch eine Strahlleitungseinrichtung 56, wie beispielsweise einer Lichtfaser 48, zu der Öffnung 52 geleitet.

Die Strahlungsbeeinflussungseinrichtung 24 weist eine Linse 60 auf, mittels der die Laserstrahlung 44 in die Prozesskammer 50 hineinfokussiert wird. Die Glasscheibe 48 der Schutzeinrichtung 26, durch die hindurch die Laserstrahlung 44 in die Prozesskammer 50 geleitet wird, schützt die Linse 60 vor Materialspritzern oder sonstigen Beeinträchtigungen durch den Umformprozess. Die Strahlungsbeeinflussungseinrichtung 24 mit der Linse 60 wird, entsprechend eines CAD-Programms in einer Datenverarbeitungsanlage 62, so gesteuert, dass die Laserstrahlung 44 an gewünschten Bereichen - Werkstück 19 - der zu bearbeitenden Materialschicht 18 selektiv auftritt.

In dem in Fig. 1 dargestellten Ausführungsbeispiel ist die Glasscheibe 48 in einer Schiebeführung 76 an der Öffnungsberandung 54 im Wesentlichen senkrecht zu der Hauptebene der Glasscheibe 48 verschiebbar gelagert. Über einen Schwingungserzeuger 64 wird eine schwingende Verschiebebewegung der Glasscheibe 48 erzeugt.

Demnach weist die Schutzeinrichtungsbewegungseinrichtung 28 des in Fig. 1 dargestellten Ausführungsbeispiels den Schwingungserzeuger 64 auf. Zum Beispiel ist ein Motor 66 mit einem Exzenterelement 68 vorgesehen, um die Glasscheibe 48 schwingend zu bewegen. Das Exzenterelement 68 ist beispielsweise ein durch den Motor 66 drehendes Rad 70 oder ein (nicht dargestelltes) Nockenelement. Das Exzenterelement 68 ist mittels einer Kopplungseinrichtung 72 an einer Einfassung 74 der Glasscheibe 48 gekoppelt.

Die Einfassung 74 ist in der als Schiebeführung 76 ausgebildeten Lagerung an der Öffnungsberandung 54 verschiebbar aufgenommen.

Alternativ kann die Lagerung 27 eine Einfassung 74 oder ein Halterelement aus elastischem Material (nicht dargestellt) aufweisen, so dass die Schutzeinrichtung 26 elastisch schwingend gelagert ist. Zum Beispiel kann eine Gummimanschette vorgesehen sein. Das Schwingen kann in unterschiedlichen Richtungen - vertikal und/oder senkrecht zur Hauptebene der Schutzeinrichtung - erfolgen.

Bei dem in Fig. 2 dargestellten zweiten Ausführungsbeispiel wird der Laser 42 selbst durch eine Scan-Einrichtung 80 über die als Fenster 78 ausgebildete Öffnung 52 bewegt. Die Scan-Einrichtung 80 wird durch die Datenverarbeitungsanlage 62 zum selektiven Bestrahlen der zu bearbeitenden Materialschicht 18 gesteuert. Die Glasscheibe 48 und die Einfassung 74 sind in diesem Ausführungsbeispiel 2 kreisrund ausgebildet und in einer Drehlagerung 82 der Öffnungsberandung 54 um eine zentrale Drehachse verdrehbar gelagert.

Die Einfassung 74 weist einen Zahnkranz 83 auf, der mit einem Zahnrad 84 kämmt, welches an den Motor 66 der Schutzeinrichtungsbewegungseinrichtung 28 gekuppelt ist.

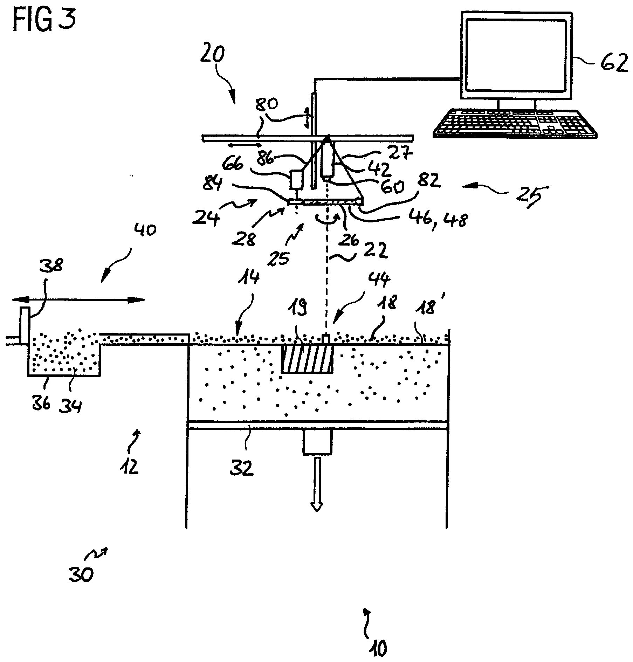

Während bei den Ausführungsbeispielen der Fig. 1 und 2 die Schutzeinrichtung 26 an einer stationären Öffnung 52 einer Prozesskammer 50 angeordnet ist, ist bei dem Ausführungsbeispiel der Fig. 3 angedeutet, dass die Schutzeinrichtung 26 auch mit der Strahlungserzeugungseinrichtung 20 bzw. der Strahlungsbeeinflussungseinrichtung 24 mitbewegbar angeordnet sein kann. Hier ist an einer an der Scan-Einrichtung 80 angeordneten Halterung 86 - weiteres Beispiel für die Lagerung 27 - die Glasscheibe 48 in ihrer Einfassung 44 relativ zu der Halterung 86 bewegbar gelagert und beispielsweise mittels des Motors 66 und des Zahnrades 84 relativ zu der Scan-Einrichtung 80 drehend bewegbar.

### Bezugszeichenliste

- 10: Fertigungsvorrichtung
- 12: Materialbereitstellungseinrichtung
- 14: zu bearbeitendes Material
- 16: Bestrahlungsvorrichtung
- 18: Materialschicht
- 18': zuletzt bearbeitete Materialschicht
- 19: Werkstück
- 20: Strahlerzeugungseinrichtung
- 22: Materialbearbeitungsstrahlung
- 24: Strahlungsbeeinflussungseinrichtung
- 25: Schutzvorrichtung
- 26: Schutzeinrichtung
- 27: Lagerung
- 28: Schutzeinrichtungsbewegungseinrichtung
- 30: Laser-Pulverbett-Anlage
- 32: Pulverbett
- 34: Materialpulver
- 36: Pulverreservoir
- 38: Schieber
- 40: Pulverauftragseinrichtung
- 42: Laser
- 44: Laserstrahlung
- 46: scheibenförmiger Körper
- 48: Glasscheibe
- 50: Prozesskammer
- 52: Öffnung
- 54: Öffnungsberandung
- 56: Strahlleitungseinrichtung
- 58: Lichtfaser
- 60: Linse
- 62: Datenverarbeitungsanlage
- 64: Schwingungserzeuger
- 66: Motor
- 68: Exzenterelement
- 70: Rad
- 72: Kopplungseinrichtung
- 74: Einfassung
- 76: Schiebeführung
- 78: Fenster
- 80: Scan-Einrichtung
- 82: Drehlagerung
- 83: Zahnkranz
- 84: Zahnrad
- 86: Halterung

## Patentansprüche

1. Schutzvorrichtung (25) zur Verwendung in einem generativen Fertigungsverfahren, in welchem zu bearbeitendes Material (14) durch eine Materialbearbeitungsstrahlung selektiv umgeformt wird, umfassend
eine für die Materialbearbeitungsstrahlung (22) transparente Schutzeinrichtung (26) zum Trennen einer Strahlerzeugungseinrichtung (20) zur Erzeugung der Materialbearbeitungsstrahlung und/oder einer zum Lenken, Fokussieren oder sonstigen Beeinflussung der Materialbearbeitungsstrahlung vorgesehenen Strahlungsbeeinflussungseinrichtung (24) von dem zu bearbeitenden Material (14) und/oder von dem Materialbearbeitungsprozess und
eine Schutzeinrichtungsbewegungseinrichtung (28) zum Bewegen der Schutzeinrichtung (26) relativ zu einer an die Schutzeinrichtung (26) angrenzenden Atmosphäre, **dadurch gekennzeichnet,**
**dass** die Schutzeinrichtungsbewegungseinrichtung (28) dazu ausgebildet ist, die Schutzeinrichtung (26) derart zu bewegen, dass eine Atmosphärengrenzschicht nahe einer Oberfläche der Schutzeinrichtung (26) turbulent beaufschlagt ist.

2. Schutzvorrichtung (25) nach Anspruch 1,
**dadurch gekennzeichnet,**
**dass** die Schutzeinrichtungsbewegungseinrichtung (28) zum Schwingen, Vibrieren und/oder Drehen der Schutzeinrichtung (26) ausgebildet ist.

3. Schutzvorrichtung (25) nach einem der voranstehenden Ansprüche, **dadurch gekennzeichnet,**
a) **dass** die Schutzeinrichtung (26) einen scheibenförmigen Körper (46) aus einem für die Materialbearbeitungsstrahlung (22) transparenten Material umfasst, wobei die Schutzeinrichtungsbewegungseinrichtung (28) zum Bewegen des Körpers relativ zu dem zu bearbeitenden Material (14) und/oder relativ zu der Materialbearbeitungsstrahlung (22) ausgebildet ist,
b) **dass** die Schutzeinrichtung (26) eine für eine als Materialbearbeitungsstrahlung (22) verwendete Laserstrahlung (44) transparente Glasscheibe (48) umfasst, wobei die Schutzeinrichtungsbewegungseinrichtung (28) zum Bewegen der Glasscheibe (48) relativ zu dem zu bearbeitenden Material (14) und/oder relativ zu der Materialbearbeitungsstrahlung (22) ausgebildet ist und/oder
c) **dass** die Schutzeinrichtungsbewegungseinrichtung (28) einen Motor (66) zum Bewegen der Schutzeinrichtung (26) und/oder einen Schwingungserzeuger (64) zum Vibrieren oder Schwingen der Schutzeinrichtung (26) umfasst.

4. Fertigungsvorrichtung (10) zum Durchführen eines generativen Fertigungsverfahrens, umfassend eine Materialbereitstellungseinrichtung (12) zum Bereitstellen von Material, eine Bestrahlungsvorrichtung (16) zum selektiven Bestrahlen des durch die Materialbereitstellungseinrichtung (12) bereitgestellten zu bearbeitenden Materials und eine zwischen der Materialbereitstellungseinrichtung (12) und der Bestrahlungseinrichtung (16) angeordnete Schutzvorrichtung (25) nach einem der voranstehenden Ansprüche.

5. Fertigungsvorrichtung (10) nach Anspruch 4,
**dadurch gekennzeichnet,**
**dass** eine Prozesskammer (50) zum Durchführen der Materialbearbeitung vorgesehen ist und dass die Schutzeinrichtung (26) die Prozesskammer (50) von der Bestrahlungsvorrichtung (16) abtrennt.

6. Fertigungsvorrichtung (10) nach Anspruch 5,
**dadurch gekennzeichnet,**
**dass** die Schutzeinrichtung (26) eine Scheibe aus für die Materialbearbeitungsstrahlung (22) transparentem Material umfasst, die in eine Öffnung (52) der Prozesskammer (50) eingesetzt ist und relativ zu einer die Öffnung (52) berandenden Öffnungsberandung (54) der Prozesskammer (50) beweglich gelagert ist, wobei die Schutzeinrichtungsbewegungseinrichtung (28) zur Bewegung der Scheibe relativ zu der Öffnungsberandung (54) ausgebildet ist.

7. Fertigungsvorrichtung (10) nach einem der Ansprüche 4 bis 6,
**dadurch gekennzeichnet,**
**dass** die Bestrahlungsvorrichtung (16) eine Strahlerzeugungseinrichtung (20) zum Erzeugen der Materialbearbeitungsstrahlung (22) und/oder eine Strahlungsbeeinflussungseinrichtung (24) zur Beeinflussung der Materialbearbeitungsstrahlung (22) aufweist.

8. Fertigungsvorrichtung (10) nach Anspruch 7,
**dadurch gekennzeichnet,**
**dass** die Strahlerzeugungseinrichtung (20) einen Laser (42) zum Erzeugen einer Laserstrahlung (44) als Materialbearbeitungsstrahlung (22) umfasst.

9. Fertigungsvorrichtung (10) nach Anspruch 7 oder 8,
**dadurch gekennzeichnet,**
**dass** die Strahlungsbeeinflussungseinrichtung (24) eine Linse (60) zum Fokussieren der Materialbearbeitungsstrahlung (22) umfasst.

10. Fertigungsvorrichtung (10) nach einem der Ansprüche 4 bis 9,
**dadurch gekennzeichnet,**
**dass** sie als Laser-Pulverbett-Anlage (30) zum schichtweisen Generieren und/oder Umschmelzen von Pulvermaterial, Metallpulver und/oder Kunststoffpulver ausgebildet ist.

11. Generatives Fertigungsverfahren zum schichtweisen Generieren eines Werkstücks (19) durch selektives Bestrahlen eines zu bearbeitenden Materials (14) mit einer Materialbearbeitungsstrahlung (22), umfassend:
a) Leiten der Materialbearbeitungsstrahlung (22) durch eine Schutzeinrichtung (26), um eine Strahlerzeugungseinrichtung (20) und/oder eine Strahlungsbeeinflussungseinrichtung (24) von dem Materialbearbeitungsprozess zu trennen, und
b) Bewegen der Schutzeinrichtung (26),
**dadurch gekennzeichnet,**
**dass** Schritt b) umfasst: Erzeugen einer turbulenten Grenzschicht an einer Oberfläche der Schutzeinrichtung (26), um eine Verschmutzung und/oder eine Kondensation von zu bearbeitendem Material (14) auf der Schutzeinrichtung (26) zu verringern oder zu verhindern.

12. Fertigungsverfahren nach Anspruch 11,
**dadurch gekennzeichnet,**
**dass** Schritt a) umfasst: Leiten einer Laserstrahlung (44) durch ein als Schutzeinrichtung (26) verwendetes Schutzglas.

13. Fertigungsverfahren nach Anspruch 11 oder 12,
**dadurch gekennzeichnet,**
**dass** Schritt b) umfasst:
Schwingen und/oder Drehen der an einer Öffnung (52) einer Prozesskammer (50) angeordneten Schutzeinrichtung (26) relativ zu der Öffnung (52).

## Claims

1. Protection device (25) for use in a generative production method in which material (14) to be processed is selectively deformed using a material processing radiation, the device comprising:
a protection device (26) transparent to the material processing radiation (22) for separating a beam generator (20) for generating the material processing radiation and/or a radiation influencing device (24) provided for guiding, focusing or otherwise influencing the material processing radiation from the material (14) to be processed and/or from the material processing process and
a protection device moving means (28) for moving the protection device (26) relative to an atmosphere adjacent to the protection device (26), **characterized in**
**that** the protection device moving means (28) is configured for moving the protection device (26) so that an atmosphere boundary layer near a surface of the protection device (26) is subjected to turbulence.

2. Protection device (25) according to claim 1,
**characterized in that** the protection device moving means (28) is configured for oscillating, vibrating and/or rotating the protection device (26).

3. Protection device (25) according to one of the preceding claims, **characterized in**
a) **that** the protection device (26) comprises a disk-shaped body (46) of a material transparent to the material processing radiation (22), wherein the protection device moving means (28) is configured for moving the body relative to the material (14) to be processed and/or relative to the material processing radiation (22),
b) **that** the protection device (26) comprises a glass pane (48) transparent to laser radiation (44) used as a material processing radiation (22), wherein the protection device moving means (28) is configured for moving the glass pane (48) relative to the material (14) to be processed and/or relative to the material processing radiation (22) and/or
c) **that** the protection device moving means (28) comprises a motor (66) for moving the protection device (26) and/or an oscillator (64) for vibrating or oscillating the protection device (26).

4. Production device (10) for carrying out a generative production method, the device comprising a material delivery device (12) for the delivery of material, ein radiation device (16) for selectively radiating the to-be-processed material delivered by the material delivery device (12) and a protection device (25) as defined by one of the preceding claims disposed between the material delivery device (12) and the radiation device (16).

5. Production device (10) according to claim 4,
**characterized in that** a process chamber (50) for carrying out the material processing is provided and that the protection device (26) separates the process chamber (50) from the radiation device (16).

6. Production device (10) according to claim 5,
**characterized in that** the protection device (26) comprises a pane of material transparent to the material processing radiation (22) which is inserted in an opening (52) of the process chamber (50) and is supported for movement relative to an opening edge (54) of the process chamber (50) which bounds the opening (52), wherein the protection device moving means (28) is configured for moving the pane relative to the opening edge (54).

7. Production device (10) according to one of the claims 4 to 6, **characterized in that** the radiation device (16) comprises a radiation generator (20) for generating the material processing radiation (22) and/or a radiation influencing device (24) for influencing the material processing radiation (22).

8. Production device (10) according to claim 7,
**characterized in that** the radiation generator (20) comprises a laser (42) for generating a laser radiation (44) as a material processing radiation (22).

9. Production device (10) according to claim 7 or 8,
**characterized in that** the radiation influencing device (24) comprises a lens (60) for focusing the material processing radiation (22).

10. Production device (10) according to one of the claims 4 to 9,
**characterized in that** the device is configured as a laser powder bed system (30) for the layerwise generation and/or remelting of powder material, metal powder and/or plastic powder.

11. Generative production method for the layerwise generation of a work piece (19) by selectively radiating a material (14) to be processed with a material processing radiation (22), the method comprising:
a) passing the material processing radiation (22) through a protection device (26) in order to separate a beam generator (20) and/or a radiation influencing device (24) from the material processing process and
b) moving the protection device (26),
**characterized in that** step b) comprises: generating a turbulent boundary layer on a surface of the protection device (26) in order to reduce or prevent a contamination and/or condensation of material (14) to be processed on the protection device (26).

12. Production method according to claim 11,
**characterized in that** step a) comprises: passing a laser radiation (44) through a protective glass used as a protection device (26).

13. Production method according to claim 11 or 12,
**characterized in that** step b) comprises: oscillating and/or rotating the protection device (26) disposed at an opening (52) of a process chamber (50) relative to the opening (52).

## Revendications

1. Dispositif de protection (25) destiné à l'utilisation dans un procédé de fabrication génératif, dans lequel un matériau à traiter (14) est transformé sélectivement par un rayonnement de traitement de matériau, comportant
un moyen de protection (26) transparent au rayonnement de traitement de matériau (22) pour séparer un moyen de génération de rayonnement (20) destiné à générer le rayonnement de traitement de matériau et/ou un moyen d'influence de rayonnement (24) destiné à diriger, focaliser ou influencer d'une autre manière le rayonnement de traitement de matériau, vis-à-vis du matériau à traiter (14) et/ou du processus de traitement de matériau, et
un moyen de déplacement (28) pour déplacer le moyen de protection (26) par rapport à une atmosphère adjacente au moyen de protection (26),
**caractérisé en ce que**
le moyen (28) de déplacement du moyen de protection est réalisé pour déplacer le moyen de protection (26) de telle sorte qu'une couche limite d'atmosphère proche d'une surface du moyen de protection (26) subit une sollicitation turbulente.

2. Dispositif de protection (25) selon la revendication 1,
**caractérisé en ce que**
le moyen (28) de déplacement du moyen de protection est réalisé pour faire osciller, vibrer et/ou tourner le moyen de protection (26).

3. Dispositif de protection (25) selon l'une des revendications précédentes, **caractérisé en ce que**
a) le moyen de protection (26) comprend un corps (46) en forme de plaque en matériau transparent au rayonnement de traitement de matériau (22), le moyen (28) de déplacement du moyen de protection étant réalisé pour déplacer le corps par rapport au matériau à traiter (14) et/ou par rapport au rayonnement de traitement de matériau (22),
b) le moyen de protection (26) comprend une vitre en verre (48) transparente à un rayonnement laser (44) utilisé à titre rayonnement de traitement de matériau (22), le moyen (28) de déplacement du moyen de protection étant réalisé pour déplacer la vitre en verre (48) par rapport au matériau à traiter (14) et/ou par rapport au rayonnement de traitement de matériau (22),
et/ou
c) le moyen (28) de déplacement du moyen de protection comprend un moteur (66) pour déplacer le moyen de protection (26) et/ou un générateur d'oscillation (64) pour faire vibrer ou osciller le moyen de protection (26).

4. Dispositif de fabrication (10) pour mettre en oeuvre un procédé de fabrication génératif, comportant un moyen d'approvisionnement de matériau (12) pour approvisionner un matériau, un dispositif d'irradiation (16) pour irradier sélectivement le matériau à traiter approvisionné par le moyen d'approvisionnement de matériau, et un dispositif de protection (25) selon l'une des revendications précédentes agencé entre le moyen d'approvisionnement de matériau (12) et le moyen d'irradiation (16).

5. Dispositif de fabrication (10) selon la revendication 4,
**caractérisé en ce que**
il est prévu une chambre de traitement (50) pour mettre en oeuvre le traitement du matériau, et **en ce que** le moyen de protection (26) sépare la chambre de traitement (50) vis-à-vis du dispositif d'irradiation (16).

6. Dispositif de fabrication (10) selon la revendication 5,
**caractérisé en ce que**
le moyen de protection (26) comprend une plaque en matériau transparent au rayonnement de traitement de matériau (22), qui est insérée dans une ouverture (52) de la chambre de traitement (50) et qui est montée de façon mobile par rapport à une bordure d'ouverture (54) entourant l'ouverture (52) de la chambre de traitement (50), le moyen (28) de déplacement du moyen de protection étant réalisé pour déplacer la plaque par rapport à la bordure d'ouverture (54).

7. Dispositif de fabrication (10) selon l'une des revendications 4 à 6,
**caractérisé en ce que**
le dispositif d'irradiation (16) comprend un moyen de génération de rayonnement (20) pour générer le rayonnement de traitement de matériau (22) et/ou un moyen d'influence de rayonnement (24) pour influencer le rayonnement de traitement de matériau (22).

8. Dispositif de fabrication (10) selon la revendication 7,
**caractérisé en ce que**
le moyen de génération de rayonnement (20) comprend un laser (42) pour générer un rayonnement laser (44) à titre de rayonnement de traitement de matériau (22).

9. Dispositif de fabrication (10) selon la revendication 7 ou 8,
**caractérisé en ce que**
le moyen d'influence de rayonnement (24) comprend une lentille (60) pour focaliser le rayonnement de traitement de matériau (22).

10. Dispositif de fabrication (10) selon l'une des revendications 4 à 9,
**caractérisé en ce que**
il est réalisé sous forme d'installation laser à lit pulvérulent (30) pour la génération et/ou la ré-fusion par couches de matériau en poudre, de poudre métallique et/ou de poudre de matière plastique.

11. Procédé de fabrication génératif pour la génération par couches d'une pièce à oeuvrer (19) par irradiation sélective d'un matériau à traiter (14) avec un rayonnement de traitement de matériau (22), consistant à
a) diriger le rayonnement de traitement de matériau (22) à travers un moyen de protection (26) pour séparer un moyen de génération de rayonnement (20) et/ou un moyen d'influence de rayonnement (24) vis-à-vis du processus de traitement de matériau, et
b) déplacer le moyen de protection (26),
**caractérisé en ce que**
l'étape b) consiste à générer une couche limite turbulente sur une surface du moyen de protection (26) pour réduire ou pour empêcher un encrassement et/ou une condensation de matériau à traiter (14) sur le moyen de protection (26).

12. Procédé de fabrication selon la revendication 11,
caractérisé en que
l'étape a) consiste à diriger le rayonnement laser (44) à travers un verre de protection utilisé à titre de moyen de protection (26).

13. Procédé de fabrication selon la revendication 11 ou 12,
caractérisé en que
l'étape b) consiste à faire osciller et/ou tourner un moyen de protection (26), agencé sur une ouverture (52) d'une chambre de traitement (50), par rapport à l'ouverture (52).
